# EUROPEAN PATENT APPLICATION

(11) **EP 2 392 499 A1**
(43) Date of publication of application: **07.12.2011**
(21) Application number: 10382157.5
(22) Date of filing: 01.06.2010
(51) Int. Cl.: B60R 13/02, B60N 3/02

(54) **Device for attaching accessories for automobile interiors**

(71) Applicant: GRUPO ANTOLIN-INGENIERIA, S.A., 09007 Burgos (ES)
(72) Inventor: Fernández Salvador, Enrique, 09001, Burgos (ES); Del Pozo Abejón, Rubén, 09006, Burgos (ES); Escudero Delgado, Jesús Vicente, 09004, Burgos (ES)
(74) Representative: Capitan Garcia, Maria Nuria

(57) **Abstract**

A staple (1) for attaching accessories for automobile interiors in a rectangular window of the body is made of a flat metal sheet.
The staple has a post (124) and wings (126).
A fold (1211) in the post results in a reduced height of said post such that the available length of the wings is greater, which reduces the required insertion force.

## Description

### OBJECT OF THE INVENTION

The present invention relates to a device for attaching accessories for automobile interiors, specifically designed for attaching both the lining and certain internal accessories of automobiles to the vehicle body, based on structural characteristics of the components that make up the attachment device which simplify their installation without damaging any of the components that make up the attachment device.

The object of the invention is to provide a new attachment device for attaching internal accessories and lining of automobiles that comprises a metal staple, a window provided in the vehicle body and a screw for attaching an accessory to said metal staple.

An additional object of the invention is a staple of the type that consists of a metal part comprising a base, a staple head, a post and flexible wings, wherein said staple is disposed to be housed and anchored in an orifice provided for this purpose in the vehicle body, being constituted in a manner such that it simplifies the installation of the staple on the vehicle body by reducing the insertion force required, without having a negative effect on the stiffness of the staple or its attachment capacity.

### BACKGROUND OF THE INVENTION

Different attachment devices can be used for attaching internal vehicle accessories. A specific type of these are based on the use of elastic deformation in a housing provided for this purpose, which can have different configurations depending on the materials that make up both the staples and the elements for locking or attaching the accessories on them, a specific case being metallic or metallo-plastic staples.

Specifically, to attach accessories that require supporting large loads, such as handles, sun visors or airbag modules, it is necessary to use metallic devices consisting of metal staples with screws or the like to attach the accessories.

These staples are normally made from a flat metal sheet that in turn consists of a first element that makes up the base of the staple, from which run opposing lateral projections, which is subsequently partially die-cut and folded, so that these lateral projections converge towards cach other to form the different parts of the staple: the base, from which these lateral projections run; the staple head in the area of convergence of the ends of the lateral projections; a post that is connected to the staple at the base; and flexible wings connected to the post at the top through the staple head, such that between the pillar and the wings there is a continuity of the material through the staple head.

To install this type of staples, the staples are passed through a normally rectangular opening made in the vehicle body. The accessory is then held in place with the lining of the vehicle, which rests against the vehicle body. The accessory is attached to the staple with a screw, the staple being provided on its base with a through orifice for attaching said attachment screw.

Metallic attachment staples with a screw are known, for example, in patent application P9501623.

This type of staples with a screw are very stiff and can therefore withstand the loads resulting from the use of the accessories they attach. However, they have drawbacks related to the installation of the staple in the opening made in the vehicle body, particularly related to the force required to insert them in the mounting operation.

In these cases, the force required to install the staple, the insertion force, is large due to the resistance of the wings to folding when installing the staple, particularly at the time when the staple wings meet the walls of the opening made in the vehicle body.

In addition, the need to exert a large force to install the staple can lead to a poor control in the installation, which in turn can cause damage to the staple and the vehicle body, as well as a poor positioning of the staple in the corresponding opening.

It is therefore desirable to minimise the insertion force required by the operator as much as possible, in order to simplify the staple installation and avoid damage to the staple and/or the vehicle body during installation, without reducing the strength of the resulting attachment.

One way to reduce this insertion force is to make the staple wings longer, thereby increasing their bending capability.

Patent application PCT/ES01/00391 by the present applicant is known, in which the length of the wings is increased by using part of the material that makes up the base of the Staple.

This configuration solves the drawback related to the insertion force, as the staple wings have a greater flexibility. However, a new drawback arises regarding the integrity of the staple, which is reduced by the reduction in material of the staple base required to increase the length of the wings. Therefore, this attachment device becomes less stiff and presents potential stability problems.

### DESCRIPTION OF THE INVENTION

In view of the above, it is considered necessary to solve the drawbacks of the state of the art with an attachment device having a configuration that allows reducing the staple insertion force without detriment of the functionality or integrity of the staple.

Therefor, the present invention relates to a device for attaching internal vehicle accessories,
wherein said attachment device consists of:
- a symmetrical staple comprising:
   - a rectangular base;
   - a post;
   - a staple head; and
   - wings;
   such that the staple is formed from a flat metallic plate consisting of a first element that makes up the base of the staple and is provided with at least one orifice, and two opposing lateral projections that run symmetrically with respect to said base, wherein said metallic plate is partially die-cut and bent to form:
   the post, consisting of first segments of said lateral projections, located as an extension of the base of the staple;
      - the staple head, consisting of a contact area between second end segments of said lateral projections, located as an extension of the first segments;
      - the wings, consisting of third segments of the lateral projections, located as an extension of the second end segments and having a free wing end;
   wherein the contact area defined by the staple head is divided into two differentiated areas, a first contact area that runs between the first segments and the free ends of the staple head, and a second contact area that runs between the third segments and said free ends of the staple head, the two contact areas being adjacent to one another;
      - a rectangular window made in the vehicle body in order to attach an accessory and a lining, wherein said window comprises an opening having a peripheral edge and a peripheral surface located on the vehicle body surrounding said opening and having a first support face and a second support face;
   wherein the base of the staple is placed in correspondence with the first support face of the peripheral surface and the free ends of the wings are placed in correspondence with the second support face of the peripheral surface,
      - a screw for attaching the accessory and lining with the staple, through the orifice made in the base of the latter;
      characterised in that
      the first segments that form the post have at least one fold that reduces the height of said post, such that the available extension length of the staple wings is greater than the available extension length of these staple wings when the height of said post has not been reduced by at least one fold.

Firstly, the reduction in the height of the post that makes up the staple by making in it at least one fold implies an increase in the available extension length for constituting the staple wings, compared to an identical staple in which the height of the post has not been reduced.

Therefor, the wings that make up the new staple, due to their increased available length, can also increase their flexibility.

In this way, this special configuration of the staple allows, firstly, to reduce the insertion force required for it in its installation and therefore the time required to install the accessory on the vehicle body.

Secondly, due to the reduced insertion force, a controlled installation of the stale is guaranteed, on one hand ensuring its correct positioning and therefore that of the accessory, and on another hand avoiding deformations in the installation of both the staple itself and the plate of the vehicle body, maintaining their integrity regardless of how many times the staple is installed, thereby ensuring its correct operation at all times.

As an option, the staple can have a configuration in which each of the wings that conform it has two differentiated segments, a first segment located after the staple head and a second segment located after the first segment, such that each of these segments has a different slope, the first segment being at a greater angle to the plane of symmetry of the staple than the second segment.

This optional configuration of the invention provides advantages in the installation of the staple on the vehicle body, as on one hand it simplifies guiding the staple to its final position practically from the moment that the staple head is inserted in the opening that defines the window in the vehicle body, and on another hand it increases the sensitivity of the worker during the installation of the staple.

### DESCRIPTION OF THE DRAWING

The present descriptive memory is completed by a set of figures provided for purposes of illustration and in no way meant to limit the invention.
Figure 1 shows a cross-sectional view of the attachment device in its installed position.
Figure 2 shows two schematic perspective views of the opening made in the vehicle body for attaching the staple, one showing the second support face of the peripheral surface and the other showing the first support face of the same peripheral surface.
Figure 3 shows a plan view of the metal sheet used to make the staple, also referred to as the extension of the staple.
Figures 3.1, 4.2 and 4.3 show different perspective views of the staple identifying all of its main parts.
Figure 5 shows a cross-sectional view of the contact areas that make up the staple head.
Figure 6.1 shows a cross-sectional view of the staple identifying both the plane of symmetry of the staple and the slopes of the various segments of the staple with respect to said plane of symmetry.
Figure 6.2 shows a cross-sectional view of a staple corresponding to the state of the art, in which the height of the post has not been reduced and identifying the slope of the corresponding wing configured with a single segments.

### PREFERRED EMBODIMENT OF THE INVENTION

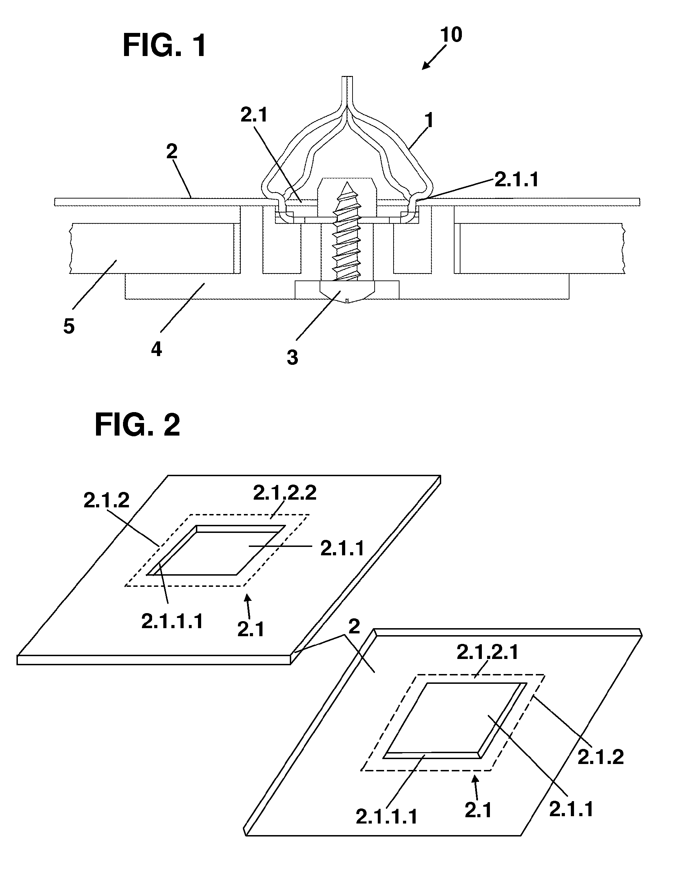

As shown in figure 1, the attachment device (10) of the invention consists of a symmetrical metallic staple (1), a window (2.1) made in the vehicle body (2) and a screw (3) for attaching an accessory (4) to the staple (1).

The accessory (4) is attached to the staple (1) with the screw (3) and the staple (1) is then oriented with its head facing the inside of the window (2.1) made in the vehicle body (2) in order to attach the staple to it.

The lining (5) is between the vehicle body (2) and the accessory (4). Therefore, the staple (1) in addition to attaching the accessory (4) is also a means for holding the lining (5) against the vehicle body (2).

Therefore, when the staple (1) is attached with the screw (3) to the accessory (4) and the lining (5), as shown in figure 1, the final attachment to the vehicle body (2) is established by fixing the staple (1) in the window (2.1) made in the vehicle body (2) so that, when the staple (1) is inserted through the window (2.1), its wings (1.2.2) bend when they meet the edges of said window, allowing the staple (1) to pass until the free ends of the wings reach their final position on the peripheral edge of the opening (2.1.1) of the window (2.1), so that the staple (1) is fixed in said window (2.1) with the accessory (4) and the lining (5) under the vehicle body (2).

Having provided a brief explanation of the installation process for the accessory (4) and the lining (5) with the attachment device (10), the geometrical features of each of the elements that make up the attachment device (10) will be described in detail.

As stated earlier, the attachment device (10) of the invention consists of a metallic staple (1), a window (2.1) made in the vehicle body (2) and a screw (3) for attaching an accessory (4) to the staple (1).

Firstly, as shown in figure 2, the window (2.1) has a rectangular configuration. On another hand, the window (2.1) has an opening (2.1.1) that allows the staple (1) to pass in order to attach the accessory (4) and the lining (5), and a peripheral surface (2.1.2) shown in figure 2 by a discontinuous line located in the vehicle body (2) that surrounds said opening (2.1.1).

The opening (2.1.1) is limited by a peripheral edge (2.1.1.1) defined by the four faces created when making the opening (2.1.1) in the vehicle body (2).

On another hand, the peripheral surface (2.1.2) surrounding the opening (2.1.1) has a first support face (2.1.2.1) for both the staple (1) and the accessory (4) and a second support face (2.1.2.2) for the staple (1) on the vehicle body (2).

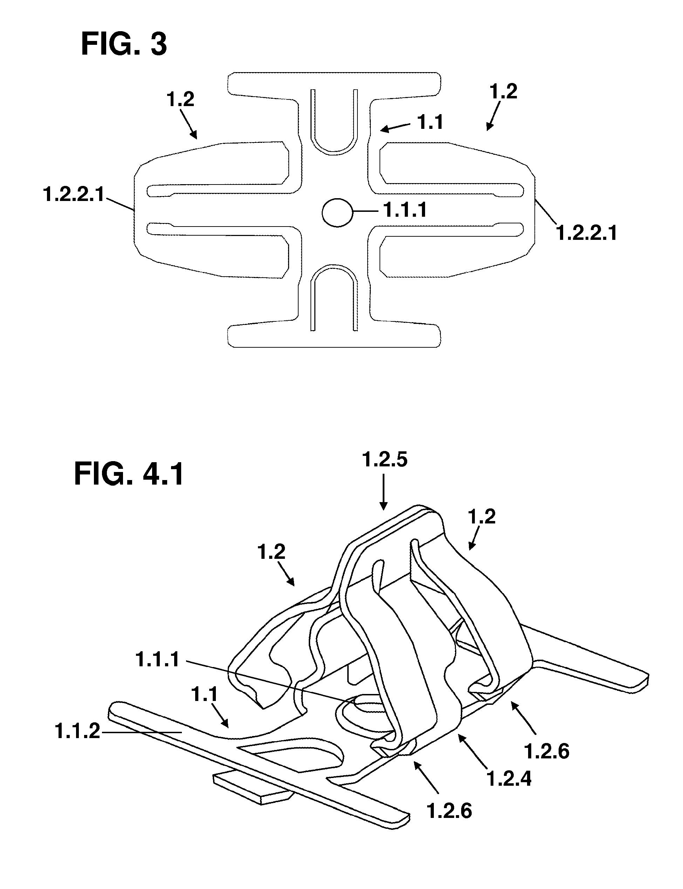

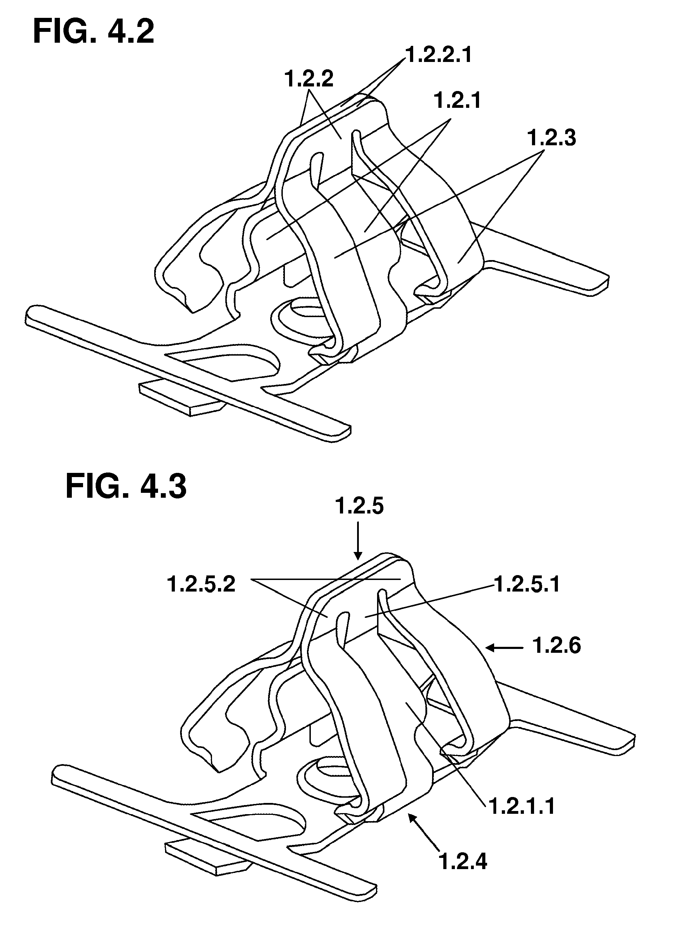

Secondly, as shown in figure 3 which represents the extension of the staple (1), this is made from a flat metal sheet comprising a first element that leads to the base (1.1) of the staple and has at least one orifice (1.1.1) and two opposing lateral projections (1.2) that extend from said base (1.1). Said flat metal sheet is partially die-cut and folded to create the staple (1) and its various elements shown in figures 4.1, 4.2 and 4.3.

The partial die-cutting and folding operations of the flat metal sheet allow defining the various elements that make up the staple (1) from the lateral projections (1.2):
- the post (1.2.4) consisting of first segments (1.2.1) of said lateral projections (1.2), located as an extension of the base (1.1) of the staple (1);
- the staple head (1.2.5) consisting of a contact area between second end segments (1.2.2) of said lateral projections (1.2), located as extensions of the first segments (1.2.1);

The aforementioned contact area that constitutes the staple head (1.2.5) is in turn divided into two differentiated areas, a first contact area (1.2.5.1) that extends between the first segment (1.2.1) and the free ends (1.2.2.1) of the staple head (1.2.5), and a second contact area (1.2.5.2) that extends between the third segments (1.2.3) and the aforementioned free ends (1.2.2.2) of the staple head (1.2.5), these contact areas being adjacent to each other;
- wings (1.2.6) consisting of third segments (1.2.3) of the lateral projections (1.2), located as extensions of the second end segments (1.2.2) and having a free end (1.2.6.3) of the wing (1.2.6);

Said free end (1.2.6.3) has an elbowed configuration such that the staple (I) is attached to the vehicle body as it cannot exit due to the interference between said free end (1.2.6.3) and the window (2.1) made in the vehicle body (2) as said free end (1.2.6.3) rests against the second support face (2.1.2.2) of the peripheral surface (2.1.2).

In the variant shown in the figures, the free end (1.2.6.3) of the wing (1.2.6) is also adapted to the peripheral edge (2.1.1.1) of the opening (2.1.1), partially enveloping said peripheral edge (2.1.1.1) of the opening (2.1.1) that forms the window (2.1) of the vehicle body (2).

In another variant (not shown) the free end (1.2.6.3) of the wing (1.2.6) rests on the second support face (2.1.2.2) that makes up the peripheral surface (2.1.2) of the window (2.1) by a configuration of the free end (1.2.6.3) parallel to the surface of the vehicle body (2).

In the specific case shown in the figures, the staple (1) that makes up the attachment device (10) has four lateral wings (1.2.6) disposed on the sides of the post (1.2.4).

However, an embodiment of the invention (not shown) is also considered in which the staple (1) has two central wings (1.2.6) disposed between the first segments (1.2.1) that make up the post (1.2.4). In this case, the post (1.2.4) is therefore formed by four first lateral segments (1.2.1) located on both sides of the third segments (1.2.3) that make up the wings, instead of the two first segments (1.2.1) shown in the figures.

As can be seen in the figures, the first segments (1.2.1) that make up the post (1.2.4) have at least one fold (1.2.1.1) that results in a lower height of said post (1.2.4) and therefore a lower total height of the staple (1).

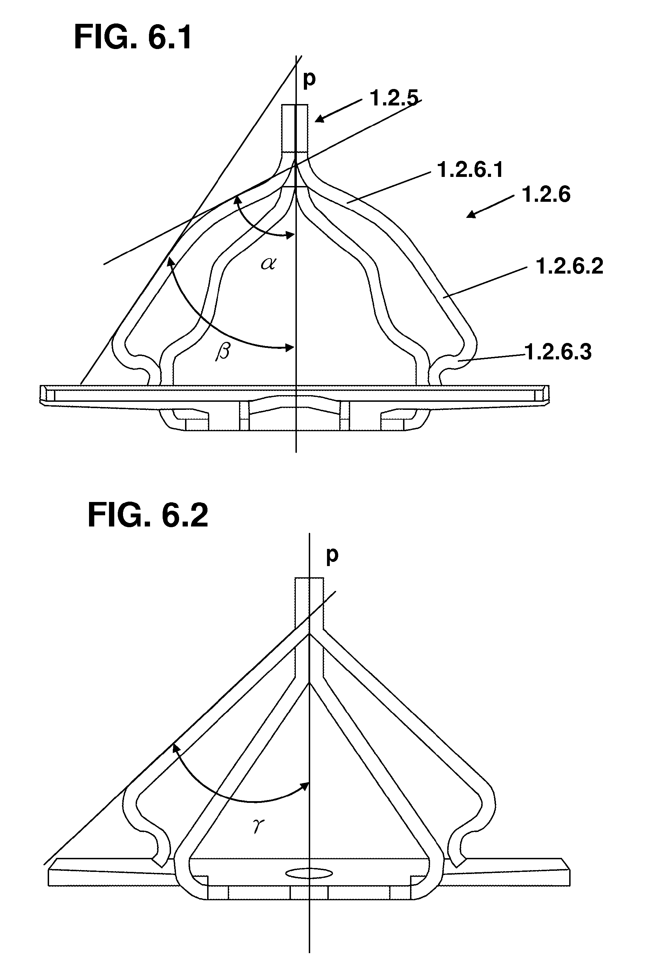

Due to the lower height of the post (1.2.4) when establishing the fold(s) (1.2.1.1) in the first segments (1.2.1) that conform it, the length of the extension available to generate the wings (1.2.6) that form part of the staple (1) is increased compared to a configuration of a staple according to the state of the art, as that shown in figure 6.2, where the post has no folds in its second segments.

This increased length of the extension available for the wings (1.2.6) allows increasing their flexibility such that when these meet the opening (2.1.1) of the window (2.1) of the vehicle body (2), they offer a lower resistance to bending and therefore reduce the insertion force required to attach the staple (1) on the vehicle body (2).

A variant of the staple (1) of the invention allows completing the embodiment described above by increasing the flexibility of these wings (1.2.6) even more by a configuration having a smaller second contact area (1.2.5.2) of the staple head (1.2.5), so that the contact area becomes part of the wings (1.2.6) thereby increasing the available extension length for these.

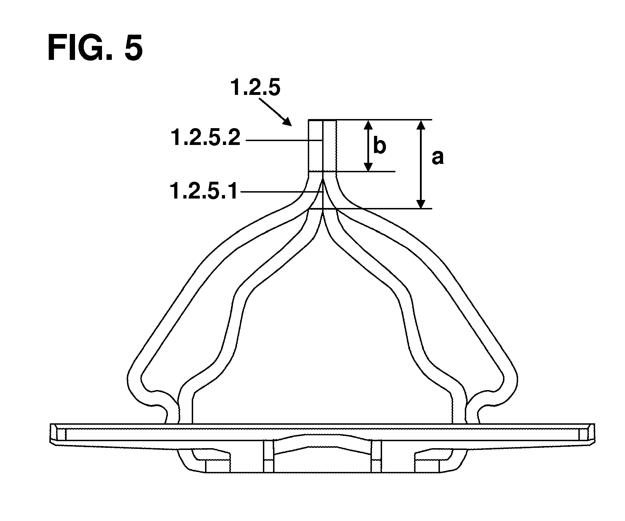

As can be seen in figure 5, which shows both the first contact area (1.2.5.1) and the second contact area (1.2.5.2), this second contact area (1.2.5.2) has a length "b" shorter than the length "a" of the first contact area (1.2.5.1) that forms the staple head (1.2.5).

To summarise, in this variant of the invention, in order to increase the flexibility of the staple (1) to reduce the force required to insert it, the available extension length of the wings (1.2.6) has been increased first by reducing the height of the post (1.2.4) and second by reducing the contact area of the wings (1.2.6) in the area of the staple head (1.2.5).

In this way, the integrity of the base (1.1) is not affected, as none of its material has been used to increase the available extension length of the wings (1.2.6) of the staple (1), thereby avoiding a weakening of the assembly formed by said staple (1).

Another variant of the staple (1) of the invention has a configuration in which for each wing (1.2.6) two differentiated segments are defined, as shown in figure 6.1, a first segment (1.2.6-1) and a second segment (1.2.6.2).

The first segment (1.2.6.1) of the wing (1.2.6) is located after the staple head (1.2.4). This first segment (1.2.6.1) helps to ensure that the force of attachment of the staple (1) is enough to guarantee its correct operation in the installed position.

The second segment (1.2.6.2) of the wing (1.2.6) located after the first segment (1.2.6.1) of the wing (1.2.6) constitutes the segment of the wing (1.2.6) where the staple (1) is in contact with the peripheral edge (2.1.1.1) of the opening (2.1.1) of the window (2.1) in the process of inserting the staple (1) in the window (2.1).

This contact with the peripheral edge (2.1.1.1) requires the wings (1.2.6) to bend, overcoming the interference between them and the opening (2.1.1) to allow the staple (1) to reach its final installed position.

Therefore, the geometrical configuration of said second segment (1.2.6.2) of the wing (1.2.6) will determine the insertion force required to place the staple (1) in said final installed position.

To minimise the insertion force, the inclination of this second segment (1.2.6.2) of the wing (1.2.6) with respect to the plane of symmetry "p" of the staple (1) perpendicular to its base (1.1) which passes through the contact area of the head (1.2.5), defined by the angle β, must be as small as possible.

To minimise the inclination of the second segment (1.2.6.1) of the wing (1.2.6) defined by the angle β, and in view of the available extension length for the wing, the inclination of the first segment (1.2.6.1) defined by the angle α must be as large as possible, and specifically larger than the inclination of the second segment (1.2.6.2) of the wing (1.2.6) with respect to said plane "p", in order to bring the second segment (1.2.6.2) of the wing as close as possible to the peripheral edge (2.1.1.1) of the opening (2.1.1 so that on one hand the inclination defined by the angle β of the second segment (1.2.6.2) of the wing is reduced and, on another hand, the free ends (1.2.6.3) of the wings remain in contact with the peripheral edge (2.1.1.1) where they establish the attachment of the staple.

On another hand, the greater the inclination of said first segment (1.2.6.1) the greater the resistance of this first segment (1.2.6.1) of the wing (1.2.6) to bending and therefore the greater the attachment strength of the staple (1).

In figure 6.2, which represents a staple according to the state of the art in which the wings are configured with a single segment, it can be seen that the inclination of these wings with respect to the plane of symmetry "p" defined by the angle γ is greater than the angle β defined by the inclination of the second segment (1.2.6.2) of the wing (1.2.6), so that the insertion force needed to install the staple in this case is grater than in the case of the invention. Therefore, the inclination of the second segment (1.2.6.2) of the wing (1.2.6) with respect to the plane of symmetry "p" defined by the angle β is smaller than the inclination with respect to the same plane "p" defined by the angle γ of the staple of the state of the art shown in figure 6.2.

On another hand, this inclination of the second segment (1.2.6.2) of the wing (1.2.6) defined by the angle β is also less than the inclination of the first segment (1.2.6.1) of the wing (1.2.6) defined by the angle α.

In addition, in order to increase the stability of the staple, the staple can have end projections (1.1.2) projecting upward, as shown in figures 4.1, 4.2 and 4.3.

These end projections (1.1.2) are located in the base (1.1) of the staple (1), and more specifically in their ends as an extension of said base (1.1).

In the installed position of the staple (1), these end projections (1.1.2) contact the support surface (2.1.2.1) of the peripheral surface (2.1.2) defined around the window (2.1) of the vehicle body (2).

## Claims

1. Device for attaching accessories for automobile interiors, wherein said attachment device (10) consists of:
- a symmetrical staple (1) comprising:
- a rectangular base (1.1)
- a post (1.2.4)
- a staple head (1.2.5) and
- wings (1.2.6);
such that said staple (I) consists of a flat metal sheet formed by a first element that gives rise to the base (1.1) of the staple (1) and has at least one orifice (1.1.1), and of two opposing lateral projections (1.2) that extend symmetrically with respect to said base (1.1), wherein said metal sheet is partially die-cut and folded to form:
- the post (1.2.4) consisting of first segments (1.2.1) of said lateral projections (1.2), located as an extension of the base (1.1) of the staple (1);
- the staple head (1.2.5) consisting of a contact area between second end segments (1.2.2) of said lateral projections (1.2), located as extensions of the first segments (1.2.1);
- the wings (1.2.6) consisting of third segments (1.2.3) of the lateral projections (1.2), located as extensions of the second end segments (1.2.2) and having a free end (1.2.6.3) of the wing (1.2.6);
wherein the contact area that forms the staple head (1.2.5) is divided into two differentiated areas, a first contact area (1.2.5.1) that extends between the first segment (1.2.1) and the free ends (1.2.2.1) of the staple head (1.2.5), and a second contact area (1.2.5.2) that extends between the third segments (1.2.3) and the aforementioned free ends (1.2.2.1) of the staple head (1.2.5), these contact areas being adjacent to each other;
- a rectangular window (2.1) configured in the vehicle body (2) for attaching an accessory (4) and a lining (5), wherein said window (2.1) comprises an opening (2.1.1) that has a peripheral edge (2.1.1.1) and a peripheral surface (2.1.2) located in the vehicle body that surrounds said opening and which presents a first support face (2.1.2.1) and a second support face (2.1.2.2);
wherein the base (1.1) of the staple (1) is located in correspondence with the first support face (2.1.2.1) of the peripheral surface (2.1.2), and the Free ends (1.2.6.3) of the wings (1.2.6) are placed in correspondence with the second support face (2.1.2.2) of the peripheral surface (2.1.2);
- a screw (3) for attaching the accessory (4) and the lining (5) with the staple (1), through the office (1.1.1) made in the base (1.1) of staple;
**characterised in that**
the first segments (1.2.1) that form the post (1.2.4) have at least one fold (1.2.1.1) that results in a reduced height of said post (1.2.4) such that the available extension length of the wings (1.2.6) of the staple (1) is greater than the length of the available extension length of said wings when the height of said post has not been reduced by at least one fold.

2. Device for attaching accessories for automobile interiors according to claim 1, **characterised in that** the dimension a of the first contact area (1.2.5.1) is greater than the dimension b of the second contact area (1.2.5.2).

3. Device for attaching accessories for automobile interiors according to claim 1, **characterised in that** the wings (1.2.6) formed by the staple present two clearly differentiated segments, a first segment (1.2.6.1) and a second segment (1.2.6.2),
the first segment (1.2.6.1) of the wing (1.2.6) being located after the staple head (1.2.5) and has a slope, with respect to a plane of symmetry "p" of the staple (1) perpendicular to the base (1.1) of the staple (1) and passing through the contact area (1.2.5) of the staple head, defined by an angle α;
the second segment (1.2.6.2) of the wing (1.2.6) being located after the first segment (1.2.6.1) of the wing (1.2.6) and constituting the segment of the wing (1.2.6) in which the staple (1) comes in contact with the peripheral edge (2.1.1.1) of the opening (2.1.1) of the window (2.1), and having a slope, with respect to the plane of symmetry "p" of the staple (1) perpendicular to the base (1.1) of the staple (1) and passing through the contact area (1.2.5) of the staple head, defined by an angle β;
wherein the angle β is smaller than the angle α.

4. Device for attaching accessories for automobile interiors according to claim 1, **characterised in that** the staple (1) has four lateral wings (1.2.6).

5. Device for attaching accessories for automobile interiors according to claim 1, **characterised in that** the staple (1) has two central wings (1.2.6).

6. Device for attaching accessories for automobile interiors according to claim 1, **characterised in that** the staple (1) has end projections (1.1.2) located on the base (1.1) of the staple (1) which come in contact with the support face (2.1.2.1) of the peripheral surface (2.1.2) defined around the window (2.1) of the vehicle body (2).

7. Device for attaching accessories for automobile interiors according to claim 1, **characterised in that** the free end (1.2.6.3) of the wing (1.2.6) presents an elbowed configuration that is adapted to the peripheral edge (2.1.1.1) of the opening (2.1.1) partially enveloping said peripheral edge (2.1.1.1) of the opening (2.1.1) formed by the window (2.1) of the vehicle body (2).

8. Device for attaching accessories for automobile interiors according to claim 1, **characterised in that** the free end (1.2.6.3) of the wing (1.2.6) rests on the second support face (2.1.2.2) that forms the peripheral surface (2.1.2) of the window (2.1) by a configuration of the free end (1.2.6.3) parallel to the surface of the vehicle body (2).
